Europäisches Patentamt

European Patent Office

Office européen des brevets

(19)

(11) Veröffentlichungsnummer : **0 338 297 B1**

# (12) EUROPÄISCHE PATENTSCHRIFT

(45) Veröffentlichungstag der Patentschrift :
**01.07.92 Patentblatt 92/27**

(51) Int. Cl.$^5$ : **B21D 43/12**

(21) Anmeldenummer : **89105656.6**

(22) Anmeldetag : **30.03.89**

(54) Transportvorrichtung für eine Stanze.

(30) Priorität : **16.04.88 DE 3812710**

(43) Veröffentlichungstag der Anmeldung :
**25.10.89 Patentblatt 89/43**

(45) Bekanntmachung des Hinweises auf die
Patenterteilung :
**01.07.92 Patentblatt 92/27**

(84) Benannte Vertragsstaaten :
**AT CH DE ES FR GB IT LI NL SE**

(56) Entgegenhaltungen :
**DE-A- 3 515 238**
**DE-B- 1 556 716**
**US-A- 2 571 790**

(73) Patentinhaber : **SCHOBER GMBH Werkzeug-
und Maschinenbau
Industriestrasse 2
W-7147 Eberdingen-Hochdorf (DE)**

(72) Erfinder : **Kostewa, Horst
Eichendorffstrasse 123
W-7143 Vaihingen/Enz (DE)**

(74) Vertreter : **Steimle, Josef, Dipl.-Ing. et al
Patentanwälte Dreiss, Hosenthien &
Fuhlendorf, Gerokstrasse 6
W-7000 Stuttgart 1 (DE)**

EP 0 338 297 B1

Jouve, 18, rue Saint-Denis, 75001 PARIS

## Beschreibung

Die Erfindung bezieht sich auf eine Transportvorrichtung mit einer transportbahn zum Abführen von Werkstücken aus einer Stanze, auf der die Stanze die abzuführenden Werkstücke in mindestens zwei zur Bewegungsrichtung des Transportes parallelen Reihen nebeneinander seitlich versetzt, jedoch gleichgerichtet ablegt, wobei die Transportgeschwindigkeit über die Breite der Transportbahn gleich ist.

Derartige Abführvorrichtungen benötigen in erster Linie Hub- oder Rotations-Stanzen, die aus einem Materialband Werkstücke ausstanzen. Um Rohmaterial zu sparen, müssen fast alle auszustanzenden Produkte, außer rechteckigen Produkten, in versetzten Werkstücken gestanzt werden. Um die gestanzten Teile maschinell fließend weiterzufördern, beispielsweise um sie dann endgültig zu stapeln oder weiterzuverarbeiten, ist es bekannt, diese versetzten Werkstücke in entweder zwei Ebenen weiterzuverarbeiten oder diese in gespreizter Anordnung weiterzuführen, so daß zwischen den einzelnen Werkstücken soviel Platz vorhanden ist, daß sie vereinzelt werden können. Bekannte Vorrichtungen zur Weiterbeförderung bzw. Weiterverarbeitung von auf einem Band transportierten Werkstücken in versetzter Anordung sind daher verhältnismäßig aufwendig. Außerdem benötigen sie viel Platz, so daß durch diese Vorrichtungen die gesamte Maschinenanlage verhältnismäßig lang wird.

Der Erfindung liegt die Aufgabe zugrunde, eine wesentlich einfachere Vorrichtung zur Beförderung von ursprünglich versetzt angeordneten Werkstücken zu entwickeln.

Diese Aufgabe wird ausgehend vom Stand der Technik gemäß den Oberbegriff des Anspruchs 1 dadurch gelöst, daß sich an den geradlinigen Abschnitt der Transportbahn ein hierzu im Winkel verlaufender Bahnabschnitt anschließt, dessen Transportrichtung rechtwinklig zu der an den vorderen Rand zweier benachbarter, die Stanze verlassender Werkstücke angelegten Tangente verläuft. Wenn also über die Breite des Transportbandes drei kreisförmige Teile ausgestanzt werden, so werden, um das Material möglichst vollständig auszunutzen, darauffolgend lediglich zwei kreisförmige Werkstücke ausgestanzt, die versetzt gegenüber den drei vorhergehenden Werkstücken angeordnet sind. Wenn die so auf dem Transportband liegenden Werkstücke die erfindungsgemäße Vorrichtung passiert haben, so liegen alle fünf Werkstücke nebeneinander in einer Linie auf dem der Maschine abgewandten Abschnitt der Transportbahn. Sie können dann in dieser Lage leicht gestapelt oder weiterverarbeitet werden.

Ein weiterer Vorteil der Erfindung liegt darin, daß durch die einfache Abwinkelung der Vorrichtung für den Abtransport die Gesamtlänge der Anlage auch verkürzt wird.

Der Winkel, um den die Transportbahn abgewinkelt wird, kann je nach der Form der Werkstücke unterschiedlich sein. Im einfachsten Falle, nämlich dem weiter unten ausführlich beschriebenen Ausführungsbeispiel von kreisrunden Werkstücken beträgt der Winkel etwa 150°, der Winkel der Tangente gegenüber einer Senkrechten auf die Transportrichtung aus der Maschine daher 30°.

Oft kann es beispielsweise auch notwendig sein, die Abwinkelung der Transportbahn mehrfach hintereinander durchzuführen, beispielsweise, wenn über die Breite der Transportbahn verteilt die Tangente an die vorderen Ränder von zwei benachbarten Werkstücken nicht zugleich auch die Tangente zwischen weiteren Paaren von benachbarten Werkstücken darstellt. Durch einen Knick in der Transportbahn werden dann zunächst zwei benachbarte Werkstücke in der gleichen Front angeordnet. In einem folgenden Knick werden dann die noch nicht in einer Front stehenden benachbarten Paare der einzelnen Werkstücke gleichgerichtet.

Die Erfindung läßt sich nicht nur bei Stanzen mit Vorteil verwirklichen, sondern bei allen Maschinen, bei denen Werkstücke in mehreren Reihen hintereinander seitlich versetzt abgelegt werden, um später gestapelt oder weiterverarbeitet zu werden. Außerdem läßt sich die Erfindung bei verschiedenen Ausführungen von Transportvorrichtungen verwirklichen, wesentlich ist lediglich, daß die Transportgeschwindigkeit über die Breite der beiden Abschnitte konstant ist und daß die Transportbahn einen Winkel oder Knick aufweist, der sich in der in der vorangegangenen Beschreibung erläuterten Weise an der Größe der Versetzung der einzelnen, die Maschine verlassenden Werkstücke orientiert.

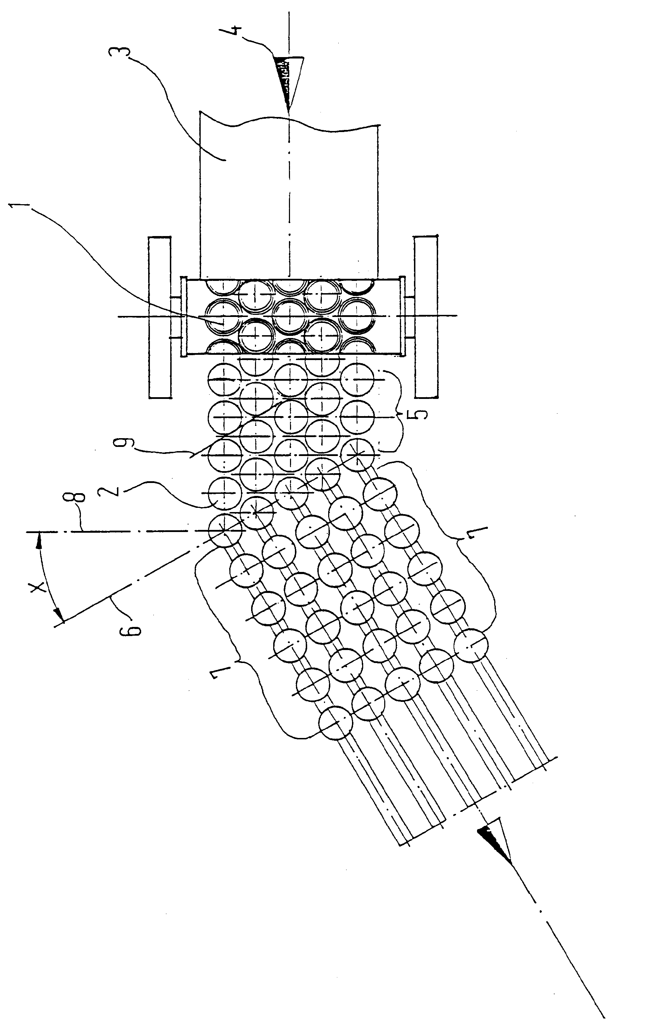

In der Zeichnung ist eine Ausführungsform der Erfindung dargestellt. Sie zeigt schematisch eine Draufsicht auf eine Ausführungsform einer erfindungsgemäßen Transportvorrichtung.

Bei der in der Zeichnung dargestellten Ausführungsform der Erfindung stanzt eine Schneidwalze 1 einer Stanze kreisförmige Werkstücke 2 aus einem Materialband 3 aus, das in Richtung des Pfeiles 4 der Stanze zugeführt wird. Um Material zu sparen, werden, wie üblich, die kreisförmigen Werkstücke 2 in versetzter Anordnung aus dem Band 3 ausgeschnitten. Das Gitter, aus dem die Werkstücke 2 angestanzt sind, wird in einer in der Zeichnung nicht dargestellten Weise aus der Stanze abgeführt. Die Werkstücke 2 fallen auf eine im einzelnen nicht dargestellte Transportvorrichtung, die die Werkstücke 2 in der in der Zeichnung dargestellten Anordnung in Transportrichtung 4 aus der Stanze herausbefördert. Dieser geradlinige Abschnitt 5 der Transportvorrichtung endet auf der der Stanze abgewandten Seite in einer schräg verlaufenden Linie 6, an die sich in der dargestellten Ausführungsform wieder ein geradliniger Abschnitt 7 der Transportvorrichtung anschließt. Die Transportvorrichtung kann beispielsweise durch Bänder verwirklicht sein, auf denen die Werkstücke 2 aufliegen. Der Winkel der Linie 6 zu der Normalen 8 zu der Transportrichtung 4 ist in der Zeichnung mit "x" bezeichnet. Die Linie 6 verläuft parallel zu einer Tangente 9 an den vorderen Rand bzw. das vordere Umfangsegment zweier benachbarter Werkstücke 2.

Da die Transportgeschwindigkeit über die ganze Breite der Abschnitte 5 bzw. 7 der Transportbahn gleich ist, wobei freilich die Transportgeschwindigkeit auf dem Abschnitt 7 größer sein kann als die mit der Transportgeschwindigkeit 4 übereinstimmende Transportgeschwindigkeit auf dem Bahnabschnitt 5, befinden sich die einander benachbarten, aber auf dem Abschnitt 5 seitlich versetzten Werkstücke 2 auf dem Bahnabschnitt 7 in einer Front. Je nach der Form der ausgestanzten Werkstücke 2 kann der Winkel x verschiedene Werte annehmen, im dargestellten Beispiel beträgt dieser Winkel 30°.

## Patentansprüche

1. Vorrichtung mit einer Transportbahn zum Abführen von Werkstücken aus einer Stanze, auf der die Stanze die abzuführenden Werkstücke in mindestens zwei zur Bewegungsrichtung des Transportes parallelen Reihen nebeneinander seitlich versetzt, aber gleichgerichtet ablegt, wobei die Transportgeschwindigkeit über die Breite der Transportbahn gleich ist, dadurch gekennzeichnet, daß sich an den geradlinigen Abschnitt (5) der Transportbahn ein im Winkel (Ergänzungswinkel x) hiervon verlaufender Bahnabschnitt (7) anschließt, dessen Transportrichtung rechtwinklig zu der an den vorderen Rand zweier benachbarter, die Stanze verlassender Werkstücke (2) angelegten Tangente (9) verläuft.

2. Vorrichtung nach Anspruch 1, dadurch gekennzeichnet, daß in die Transportbahn mehrere Abschnitte eingeschaltet sind, in denen die Laufrichtung des Transportes zu der Laufrichtung in dem vorhergehenden Abschnitt einen Winkel (x) bildet.

## Claims

1. Apparatus, having a transporting belt for conveying away workpieces from a punching machine, on which the punching machine deposits the workpieces to be conveyed away in at least two rows which are parallel to the movement direction of transporting and which are laterally offset next to one another but aligned, the transporting speed being the same over the width of the transporting belt, characterized in that adjoining the rectilinear section (5) of the transporting belt is a belt section (7) which runs at an angle (complementary angle x) therefrom and whereof the transporting direction runs at a right angle to the tangent (9) to the front edge of two adjacent workpieces (2) leaving the punching machine.

2. Apparatus according to Claim 1, characterized in that a plurality of sections are arranged in the transporting belt, in which sections the running direction of transporting forms an angle (x) to the running direction in the preceding section.

## Revendications

1. Dispositif avec une voie de transport, pour l'évacuation des pièces d'une presse à découper, sur laquelle la presse dépose les pièces à évacuer au moins en deux rangs parallèles à la direction du mouvement du transporteur, l'un à côté de l'autre déportés en sens latéral, mais dans la même direction, la vitesse de transport étant constante sur la largeur de la voie de transport, caractérisé en ce qu'au tronçon rectiligne (5) de la voie de transport se raccorde un tronçon de voie (7) qui s'étend en faisant un angle (angle supplémentaire x) avec le tronçon rectiligne (5) et dont la direction de transport s'étend perpendiculairement à la tangente (9) tirée le long du bord avant de deux pièces voisines (2) quittant la presse.

2. Dispositif selon la revendication 1, caractérisé en ce que plusieurs tronçons sont raccordés sur la voie de transport, dans lesquels la direction de marche du transporteur fait un angle (x) avec la direction de marche du tronçon précédent.